(19) Europäisches Patentamt

European Patent Office

Office européen des brevets

(11) **EP 4 723 753 A1**

(12) **EUROPEAN PATENT APPLICATION**

published in accordance with Art. 153(4) EPC

(43) Date of publication:
**08.04.2026 Bulletin 2026/15**

(21) Application number: **24848248.1**

(22) Date of filing: **30.07.2024**

(51) International Patent Classification (IPC):
***H04W 52/02*** *(2009.01)*

(52) Cooperative Patent Classification (CPC):
**H04L 5/00; H04W 52/02**

(86) International application number:
**PCT/CN2024/108308**

(87) International publication number:
**WO 2025/026293 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.07.2023 CN 202310958212**

(71) Applicant: **Huawei Technologies Co., Ltd.
Shenzhen, Guangdong 518129 (CN)**

(72) Inventors:
- **WEN, Ronghui**
  **Shenzhen, Guangdong 518129 (CN)**
- **YU, Zheng**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD AND APPARATUS**

(57) This application relates to a communication method and apparatus. A terminal device may receive configuration information used to configure a resource of a control channel. When the terminal device is in different states, a size of the resource of the control channel may be less than or equal to different thresholds. For example, the terminal device is in a first state, and the size of the resource of the control channel is less than or equal to a first threshold N1. The terminal device is in a second state, and the size of the resource of the control channel is less than or equal to a second threshold N2. In this way, the size of the resource of the control channel when the terminal device is in different states can be more flexibly limited, so that the terminal device can detect the control channel on the resource of the control channel whose size is limited, to reduce power consumption of the terminal device in detecting the control channel.

FIG. 2

**Description**

This application claims priority to Chinese Patent Application No. 202310958212.X, filed with the China National Intellectual Property Administration on July 31, 2023 and entitled "COMMUNICATION METHOD AND APPARATUS", which is incorporated herein by reference in its entirety.

**TECHNICAL FIELD**

This application relates to the field of communication technologies, and in particular, to a communication method and apparatus.

**BACKGROUND**

In a communication technology, a large resource of a control channel may be configured. As a result, a terminal device needs to detect the control channel on the large resource. This may increase power consumption of the terminal device in detecting the control channel. Therefore, how to reduce power consumption of the terminal device in detecting the control channel becomes an urgent technical problem to be resolved in a current phase.

**SUMMARY**

This application provides a communication method and apparatus, to reduce power consumption of a terminal device in detecting a control channel.

According to a first aspect, a communication method is provided. The method may be performed by a terminal device, or may be performed by a module (for example, a processor, a chip, or a chip system) used in the terminal device, or may be implemented by a logical node, a logical module, or software that can implement all or some functions of the terminal device. In the communication method, configuration information is received, where the configuration information is used to configure a resource of a control channel. The terminal device is in a first state, and a size of the resource of the control channel is less than or equal to a first threshold N1. The terminal device is in a second state, and the size of the resource of the control channel is less than or equal to a second threshold N2. N1 is less than N2. In this way, the control channel may be detected on the resource of the control channel.

It can be learned that in the foregoing implementation, the terminal device may receive the configuration information used to configure the resource of the control channel. When the terminal device is in different states, the size of the resource of the control channel may be less than or equal to different thresholds. For example, the terminal device is in the first state, and the size of the resource of the control channel is less than or equal to the first threshold N1. The terminal device is in the second state, and the size of the resource of the control channel is less than or equal to the second threshold N2. In this way, the size of the resource of the control channel when the terminal device is in different states can be more flexibly limited, so that the terminal device can detect the control channel on the resource of the control channel whose size is limited, to reduce power consumption of the terminal device in detecting the control channel.

With reference to the first aspect, optionally, before receiving the configuration information, the method further includes: sending first information, where the first information is used to determine that the terminal device expects to work in the first state or the second state, the first information is used to determine a first service requirement and/or a first transmission requirement of the terminal device, or the first information is used to determine a second service requirement and/or a second transmission requirement of the terminal device. For example, the first service requirement includes a low-rate service requirement, and the first transmission requirement includes a high-latency transmission requirement and/or a low-reliability transmission requirement. The second service requirement includes a high-rate service requirement, and the second transmission requirement includes a low-latency transmission requirement and/or a high-reliability transmission requirement.

It can be learned that in the foregoing implementation, the terminal device may send the first information, so that the network device may learn of a specific state in which the terminal device expects to work, or a current service requirement or transmission requirement of the terminal device, and may further learn of a specific threshold to which the size of the resource of the control channel should be limited. In this way, the size of the resource of the control channel can be more flexibly limited, so that the terminal device can detect the control channel on the resource of the control channel whose size is limited, to reduce power consumption of the terminal device in detecting the control channel.

According to a second aspect, a communication method is provided. The method may be performed by a network device, or may be performed by a module (for example, a processor, a chip, or a chip system) used in the network device, or may be implemented by a logical node, a logical module, or software that can implement all or some functions of the network device. In the communication method, configuration information is sent, where the configuration information is used to configure a resource of a control channel. A terminal device is in a first state, and a size of the resource of the control channel is less than or equal to a first threshold N1. The terminal device is in a second state, and the size of the resource of the control channel is less than or equal to a second threshold N2. N1 is less than N2. Therefore, the control channel may be sent on the resource of the control channel.

It can be learned that in the foregoing implementation, the network device may send the configuration information used to configure the resource of the control channel. When the terminal device is in different states, the size of the resource of the control channel may be less than or equal to different thresholds. For example, the terminal device is in the first state, and the size of the resource of the control channel is less than or equal to the first threshold N1. The terminal device is in the second state, and the size of the resource of the control channel is less than or equal to the second threshold N2. In this way, the size of the resource of the control channel when the terminal device is in different states can be more flexibly limited, so that the terminal device can detect the control channel on the resource of the control channel whose size is limited, to reduce power consumption of the terminal device in detecting the control channel.

With reference to the second aspect, optionally, before sending the configuration information, the method further includes: receiving first information, where the first information is used to determine that the terminal device expects to work in the first state or the second state, the first information is used to determine a first service requirement and/or a first transmission requirement of the terminal device, or the first information is used to determine a second service requirement and/or a second transmission requirement of the terminal device. For example, the first service requirement includes a low-rate service requirement, and the first transmission requirement includes a high-latency transmission requirement and/or a low-reliability transmission requirement. The second service requirement includes a high-rate service requirement, and the second transmission requirement includes a low-latency transmission requirement and/or a high-reliability transmission requirement.

It can be learned that in the foregoing implementation, the network device may receive the first information, so that the network device may learn of a specific state in which the terminal device expects to work, and may further learn of a specific threshold to which the size of the resource of the control channel should be limited. In this way, the size of the resource of the control channel when the terminal device is in different states can be more flexibly limited, so that the terminal device can detect the control channel on the resource of the control channel whose size is limited, to reduce power consumption of the terminal device in detecting the control channel.

With reference to the first aspect or the second aspect, optionally, the first state includes at least one of the following: an initial access state, an energy-saving state, a low-rate service transmission state, a high-latency service transmission state, a low-reliability service transmission state, and a default state; and/or the second state includes at least one of the following: a data transmission state, a high-rate service transmission state, a low-latency service transmission state, and a high-reliability service transmission state.

With reference to the first aspect or the second aspect, optionally, the first state is a state in which the terminal device supports a first capability, and the first capability includes at least one of the following: a basic capability, a mandatory capability, a default capability, and a low power consumption capability; and/or the second state is a state in which the terminal device supports a second capability, and the second capability includes at least one of the following: a non-basic capability, an optional capability, and a high power consumption capability.

With reference to the first aspect or the second aspect, optionally, N1 is a predefined value or a preconfigured value, or N1 is indicated by first signaling; and/or N2 is a predefined value or a preconfigured value, or N2 is indicated by second signaling; and/or N1 and N2 have a multiple relationship.

With reference to the first aspect or the second aspect, optionally, N1 is determined based on N2 and a first value X, and N2 is a predefined or preconfigured value; or N2 is determined based on N1 and X, and N1 is a predefined or preconfigured value. X is a predefined value or a preconfigured value, or X is indicated by third signaling.

With reference to the first aspect or the second aspect, optionally, the resource of the control channel includes a frequency domain resource of the control channel. The terminal device is in the first state, and a size of the frequency domain resource of the control channel is less than or equal to N1. The terminal device is in the second state, and the size of the frequency domain resource of the control channel is less than or equal to N2. For example, N1 and N2 are different predefined values in a same frequency band. For another example, N1 is determined based on a maximum bandwidth supported by the terminal device and a second value Y1, and/or N2 is determined based on the maximum bandwidth supported by the terminal device and a third value Y2. Y1 and Y2 are different predefined or preconfigured values, or Y1 and Y2 are different values in a first set. The first set is a predefined or preconfigured set, or the first set is indicated by fourth signaling.

With reference to the first aspect or the second aspect, optionally, N1 is determined based on a first parameter set, and the first parameter set includes at least one of the following parameters: a bandwidth part of the control channel and a subcarrier spacing of a carrier of the control channel.

With reference to the first aspect or the second aspect, optionally, the resource of the control channel includes a frequency domain resource of the control channel. The terminal device is in the first state, and a size of the frequency domain resource of the control channel is less than or equal to N1. For example, N1 is a smaller one of the bandwidth part of the control channel and a fourth value A. A is a positive integer. A is a predefined or preconfigured value, or A is indicated by fifth signaling. For another example, a size of the bandwidth part of the control channel belongs to a first bandwidth set, and N1 is less than or equal to A. The first bandwidth set is a predefined or preconfigured set, or the first bandwidth set is indicated by sixth signaling. For another example, N1=floor(the size of the bandwidth part of the control channel/n), where floor indicates rounding down, and n is a predefined or preconfigured value, or n is indicated by seventh signaling. For another example, N1=floor(floor(the size of the bandwidth part of the control channel/6)*6/n). For another example, the subcarrier spacing of the carrier of the control channel belongs to a first subcarrier spacing set, and N1 is less than or equal to A. The first subcarrier spacing set is a predefined or preconfigured set, or the first subcarrier spacing set is indicated by eighth signaling.

It can be learned that in the foregoing implementation, N1 is related to the bandwidth part of the control channel, and the size of the resource of the control channel is less than or equal to N1. In this way, an energy-saving requirement of the terminal device can be met, a more proper resource can be adapted based on a bandwidth requirement, and a service requirement can be better adapted. Alternatively, N1 is related to the subcarrier spacing of the carrier of the control channel. A larger subcarrier spacing indicates a larger bandwidth occupied by a resource element or a subcarrier, and therefore, a larger bandwidth occupied by the control channel. If a same limitation is set on the size of the resource of the control channel in different subcarrier spacings, the size of the resource of the control channel may be insufficient in a case of a large subcarrier spacing.

With reference to the first aspect or the second aspect, optionally, the resource of the control channel includes a time domain resource of the control channel. The terminal device is in the first state, and a size of the time domain resource of the control channel is less than or equal to N1. N1 is determined based on a second parameter set, and the second parameter set includes at least one of the following: a quantity of time units in the time domain resource of the control channel and a subcarrier spacing of a carrier of the control channel.

With reference to the first aspect or the second aspect, optionally, the subcarrier spacing of the carrier of the control channel belongs to a second subcarrier spacing set, N1 is less than or equal to a fifth value B, B is a predefined or preconfigured value, or B is indicated by ninth signaling, and the second subcarrier spacing set is a predefined or preconfigured set, or the second subcarrier spacing set is indicated by tenth signaling; or the quantity of time units in the time domain resource of the control channel belongs to a second set, N1 is less than or equal to B, and the second set is a predefined or preconfigured set, or the second set is indicated by eleventh signaling.

According to a third aspect, a communication method is provided. The method may be performed by a terminal device, or may be performed by a module (for example, a processor, a chip, or a chip system) used in the terminal device, or may be implemented by a logical node, a logical module, or software that can implement all or some functions of the terminal device. In the communication method, an $N^{th}$ resource in M resources in a first frequency domain range is determined, where each of the M resources is used to transmit a control channel, M is an integer greater than 1, and N is an integer greater than or equal to 1 and less than or equal to M. Therefore, the control channel may be detected on the $N^{th}$ resource.

It can be learned that in the foregoing implementation, the terminal device may determine the $N^{th}$ resource in the M resources in the first frequency domain range, and therefore may detect the control channel on the $N^{th}$ resource. This indicates that a network device does not need to notify, by using signaling, the terminal device of a specific resource on which the control channel should be detected, to reduce signaling overheads.

According to a fourth aspect, a communication method is provided. The method may be performed by a network device, or may be performed by a module (for example, a processor, a chip, or a chip system) used in the network device, or may be implemented by a logical node, a logical module, or software that can implement all or some functions of the network device. In the communication method, an $N^{th}$ resource in M resources in a first frequency domain range is determined, where each of the M resources is used to transmit a control channel, M is an integer greater than 1, and N is an integer greater than or equal to 1 and less than or equal to M. Therefore, the control channel may be sent on the $N^{th}$ resource.

It can be learned that in the foregoing implementation, the network device does not notify, by using signaling, a terminal device of a specific resource on which the control channel should be detected. In this way, signaling overheads can be reduced.

With reference to the third aspect or the fourth aspect, optionally, M is related to a size of the first frequency domain range; or M is indicated by first signaling.

It can be learned that in the foregoing implementation, a value of M is determined, so that the terminal device can learn of a quantity of resources included in the first frequency domain range, and further determine the specific resource on which the terminal device should detect the control channel. In this way, the network device does not notify, by using the signaling, the terminal device of the specific resource on which the control channel should be detected, to reduce signaling overheads.

With reference to the third aspect or the fourth aspect, optionally, M is a smallest quantity K of resources in the first frequency domain range, and K is in direct proportion to a size of the first frequency domain range.

With reference to the third aspect or the fourth aspect, optionally, M is in direct proportion to a size of the first frequency domain range; or M=floor(the size of the first frequency domain range/L), where floor indicates rounding down, and L is a predefined value or a preconfigured value, or L is indicated by second signaling.

With reference to the third aspect or the fourth aspect, optionally, N is determined based on identification information of the terminal device and M; N is indicated by third signaling; or a start position of the $N^{th}$ resource is determined based on the size of the first frequency domain range and M.

It can be learned that in the foregoing implementation, a value of N is determined, so that the terminal device can learn of the specific resource on which the control channel should be detected. In this way, the network device does not notify, by using the signaling, the terminal device of the specific resource on which the control channel should be detected, to reduce signaling overheads.

With reference to the third aspect or the fourth aspect, optionally, N=mod(the identification information of the terminal device, M), where mod indicates a modulo operation.

With reference to the third aspect or the fourth aspect, optionally, the start position of the $N^{th}$ resource=floor(the size of the first frequency domain range/M)*(N-1); or the start position of the $N^{th}$ resource=floor(floor(the size of the first frequency domain range/6)*6/M)*(N-1), where floor indicates rounding down.

According to a fifth aspect, a communication apparatus is provided, and includes a unit or a module configured to implement the method according to any one of the implementations of any one of the first aspect to the fourth aspect. The communication apparatus may be a terminal device or a network device, or may be a module (for example, a processor, a chip, or a chip system) of the terminal device or the network device, or may be a logical node, a logical module, or software that can implement all or some functions of the terminal device or the network device.

According to a sixth aspect, a communication apparatus is provided. The communication apparatus includes at least one processor. The at least one processor is configured to perform the method according to any one of the implementations of any one of the first aspect to the fourth aspect. The communication apparatus may be a terminal device or a network device, or may be a module (for example, a processor, a chip, or a chip system) of the terminal device or the network device, or may be a logical node, a logical module, or software that can implement all or some functions of the terminal device or the network device. The at least one processor may execute a computer program or instructions in a memory, so that the foregoing method is performed. The memory may be included in the communication apparatus, or may be located outside the communication apparatus. In addition, the communication apparatus may further include an interface.

According to a seventh aspect, a communication system is provided. The communication system includes a terminal device and a network device, the terminal device is configured to perform the method according to any one of the implementations of the first aspect, and the network device is configured to perform the method according to any one of the implementations of the second aspect.

According to an eighth aspect, a communication system is provided. The communication system includes a terminal device and a network device, the terminal device is configured to perform the method according to any one of the implementations of the third aspect, and the network device is configured to perform the method according to any one of the implementations of the fourth aspect.

According to a ninth aspect, a computer-readable storage medium is provided. The computer-readable storage medium stores computer instructions. When the computer instructions are executed, a computer is enabled to perform the method according to any one of the implementations of any one of the first aspect to the fourth aspect.

According to a tenth aspect, a computer program product is provided. The computer program product includes computer program code. When the computer program code is run by a computer, the computer is enabled to perform the method according to any one of the implementations of any one of the first aspect to the fourth aspect.

## BRIEF DESCRIPTION OF DRAWINGS

The following briefly describes accompanying drawings used for describing embodiments.

FIG. 1 shows a basic architecture of a communication system according to an embodiment of this application;
FIG. 2 is a schematic flowchart of a communication method according to an embodiment of this application;
FIG. 3 is a schematic flowchart of another communication method according to an embodiment of this application;
FIG. 4 is a diagram of determining a resource according to an embodiment of this application;
FIG. 5 is a diagram of a structure of a communication apparatus according to an embodiment of this application; and
FIG. 6 is a diagram of a structure of another communication apparatus according to an embodiment of this application.

## DESCRIPTION OF EMBODIMENTS

The following describes the technical solutions in embodiments of this application with reference to the accompanying drawings in embodiments of this application. The terms "system" and "network" may be used interchangeably in embodiments of this application. "/" represents an "or" relationship between associated objects unless otherwise specified. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B each may be singular or plural. In addition, in the descriptions of this application, "a plurality of" means two or more than two unless otherwise specified. At least one of the following items (pieces) or a similar expression thereof indicates any combination of these items, including a single item (piece) or any combination of a plurality of items (pieces). For example, at least one item (piece) of a, b, and (or) c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same network elements or purposes. A person skilled in the art may understand that the terms such as "first" and "second" do not limit a quantity or an execution sequence, and the terms such as "first" and "second" do not indicate a definite difference.

Reference to "an embodiment", "some embodiments", or the like described in embodiments of this application means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The objectives, technical solutions, and beneficial effects of this application are further described in detail in the following specific implementations. It should be understood that the following descriptions are merely specific implementations of this application, but are not intended to limit the protection scope of this application. Any modification, equivalent replacement, improvement, or the like made based on the technical solutions of this application shall fall within the protection scope of this application.

In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

It should be understood that the technical solutions in embodiments of this application may be applied to a long term evolution (long term evolution, LTE) frame, a 5th generation mobile communication technology (5th generation mobile network, 5G), a wireless local area network (wireless local area network, WLAN) system, a vehicle-to-everything (vehicle-to-everything, V2X) communication system, LTE-vehicle (LTE-vehicle, LTE-V), vehicle-to-vehicle (vehicle-to-vehicle, V2V), Internet of vehicles, machine type communication (machine type communication, MTC), and the like. The technical solutions in embodiments of this application may be further applied to another future communication system, for example, a 6G communication system. In a future communication system, a same function may be maintained, but a name may be changed.

The following describes a basic architecture of a communication system provided in embodiments of this application. The communication system provided in this application may include one or more network devices and one or more terminal devices.

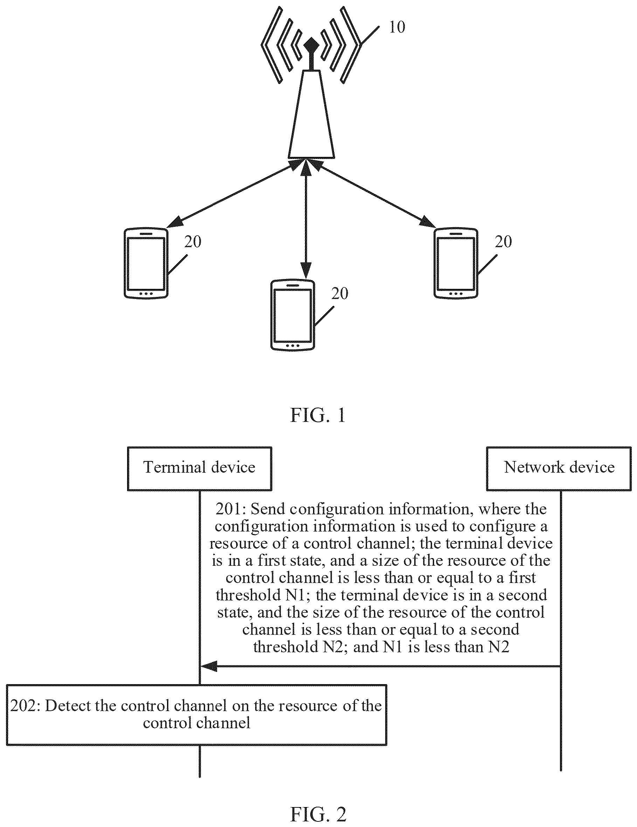

The following uses a system architecture shown in FIG. 1 as an example for description. As shown in FIG. 1, the communication system includes a network device 10 and one or more terminal devices (for example, a terminal device 20 in FIG. 1) communicating with the network device 10.

It should be noted that quantities of network devices and terminal devices in FIG. 1 are merely examples, and should not be considered as a specific limitation on this application. The following describes in detail the terminal device and the network device that are related to the system architecture.

1. Terminal device

The terminal device is an entity that is on a user side and that is configured to receive a signal, or send a signal, or receive a signal and send a signal. The terminal device is configured to provide one or more of a voice service and a data connectivity service for a user. The terminal device may be a device that has a wireless transceiver function and that may cooperate with a network device to provide a communication service for the user. Specifically, the terminal device may be user equipment (user equipment, UE), an access terminal, a subscriber unit, a subscriber station, a mobile station, a remote station, a remote terminal, a mobile device, a terminal, a wireless communication device, a user agent, a user apparatus, or a road side unit (road side unit, RSU). The terminal device may alternatively be an uncrewed aerial vehicle, an Internet of things (Internet of things, IoT) device, a station (station, ST) in a wireless local area network (wireless local area network, WLAN), a cellular phone (cellular phone), a smart phone (smart phone), a cordless phone, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal, a handheld device with a wireless communication function, a computing device or another processing device connected to a wireless modem, a vehicle-mounted device, a wearable device (which may also be referred to as a wearable smart device), a virtual reality (virtual reality, VR) terminal, an augmented reality (augmented reality, AR) terminal, a wireless terminal in telemedicine (remote medical), a wireless terminal in industrial control (industrial control), a wireless terminal in self driving (self driving), a wireless terminal in a smart grid (smart grid), a wireless terminal in transportation safety (transportation safety), a wireless terminal in a smart city (smart city), a wireless terminal in a smart home (smart home), or the like. The terminal device may alternatively be a terminal in a 5G system, or a terminal in a next generation communication system. This is not limited in embodiments of this application.

A device form of the terminal device is not limited in embodiments of this application. An apparatus for implementing a function of the terminal device may be the terminal device, or may be an apparatus, for example, a chip system, that can support the terminal device in implementing the function. The apparatus may be mounted in the terminal device or used with the terminal device. In embodiments of this application, the chip system may include a chip, or may include a chip and another discrete component.

2. Network device

The network device is an entity that is on a network side and that is configured to send a signal, or receive a signal, or send a signal and receive a signal. The network device may be an apparatus deployed in a radio access network (radio access network, RAN) to provide a wireless communication function for the terminal device.

In a possible scenario, the network device may be a device having a base station function, for example, an evolved NodeB (evolved NodeB, eNodeB), a transmission reception point (transmitting and receiving point, TRP), a transmission point (transmitting point, TP), a next generation NodeB (next generation NodeB, gNB), a next generation base station in a 6G mobile communication system, an integrated access and backhaul (integrated access and backhaul, IAB) node, or a non-terrestrial network device in an NTN, that is, a device or a satellite that may be deployed on a high-altitude platform, or the like. The network device may be a transmission reception point (transmission reception point, TRP), a base station, or a control node in various forms, for example, a network controller or a wireless controller. Specifically, the network device may be a macro base station in various forms, a micro base station (also referred to as a small cell) in a heterogeneous network (heterogeneous network, HetNet) scenario, a relay station, an access point (access point, AP), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU) and a remote radio unit (remote radio unit, RRU) in a distributed base station scenario, a transmission point (transmitting and receiving point, TRP), a transmission point (transmitting point, TP), a mobile switching center, or the like, or may be an antenna panel of a base station. The control node may be connected to a plurality of base stations, and configure resources for a plurality of terminals covered by the plurality of base stations. A device having a base station function may have different names in systems using different radio access technologies. For example, the device may be a gNB in 5G, a network side device in a network after 5G, a network device in a future evolved public land mobile (communication) network (public land mobile network, PLMN) network, or a device having a base station function in device-to-device (device-to-device, D2D) communication, machine-to-machine (machine-to-machine, M2M) communication, or Internet of vehicles communication. A specific name of the network device is not limited in this application. Alternatively, the network device may be an open access network (open RAN, O-RAN, or ORAN), a baseband pool (BBU pool) and an RRU in a cloud radio access network (cloud radio access network, CRAN), or the like.

All or some functions of the network device in this application may alternatively be implemented through a software function running on hardware, or implemented through a virtualized function instantiated on a platform (for example, a cloud platform). The network device in this application may alternatively be a logical node, a logical module, or software that can implement all or some functions of the network device.

In another possible scenario, a plurality of network devices collaborate to assist the terminal device in implementing wireless access, and different network devices separately implement some functions of the base station. For example, the network device may include a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may also have different names, but a person skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

In embodiments of this application, a form of the network device is not limited. An apparatus configured to implement a function of the network device may be the network device, or may be an apparatus that can support the network device in implementing the function, for example, a chip system. The apparatus may be mounted in the network device or used with the network device.

To facilitate understanding of content of the solutions, the following further explains and describes some terms in embodiments of this application, so as to facilitate understanding by a person skilled in the art. This part is merely for ease of understanding, and cannot be considered as a specific limitation on this application.

1. Idle (idle) state

The idle state may also be referred to as a radio resource control (radio resource control, RRC) idle state. When the terminal device is in the idle state, the terminal device does not retain an RRC context (context). The RRC context is a parameter for establishing communication between the terminal device and the network device. The RRC context may include a security context, capability information of the terminal device, and the like. In addition, the terminal device does not establish a connection to a core network device. In other words, the core network device is in CN-IDLE (a core network idle state). The terminal device does not have to-be-transmitted data, enters a sleep (sleep) state, and turns off a transceiver unit, to reduce power consumption. The terminal device in the idle state only periodically wakes up to receive a paging message.

2. Connected (connected) state

The connected state may also be referred to as an RRC connected state. When the terminal device is in the connected state, the terminal device has established an RRC context. A parameter required for establishing communication between the terminal device and the network device has been obtained by both communication parties. The network device allocates a cell radio network temporary identifier (cell radio network temporary identifier, C-RNTI) to a terminal device that accesses the network device. In addition, the terminal device also establishes a connection to the core network device. In other words, the core network device is in CN_CONNECTED (a core network connected state). In this case, if the terminal device is transmitting data, the terminal device is in a continuous reception state, and is switched to connected state discontinuous reception (discontinuous reception, DRX) when entering a waiting state after data transmission is completed, to reduce power consumption. If the terminal device still has to-be-transmitted data subsequently, the terminal device returns to the continuous reception state again. In this case, because the RRC context is established, switching time required when the UE leaves connected state DRX and prepares for continuous reception is much shorter than time required when the UE switches from the idle state to the connected state.

3. RRC inactive (inactive) state

The inactive state may also be referred to as an RRC inactive state, a deactivated state, or an RRC deactivated state. When the terminal device is in the inactive state, an RRC context is retained between the terminal device and the network device. In addition, the terminal device also establishes a connection to the core network device. In other words, the core network device is in CN_CONNECTED (a core network connected state). In this case, a procedure of switching to the connected state to receive data is relatively fast, and no additional core network signaling overheads are generated. In addition, the terminal device in the inactive state also enters a sleep state. Therefore, the inactive state can meet requirements of reducing a connection latency, signaling overheads, and power consumption.

4. Control channel

The control channel mentioned in this application may be used to send downlink scheduling information (downlink assignment, DL assignment) to a terminal device, so that the terminal device receives a physical downlink shared channel (physical downlink shared channel, PDSCH). The control channel may be further used to send an uplink grant (uplink grant, UL Grant) to the terminal device, so that the terminal device sends a physical uplink shared channel (physical uplink shared channel, PUSCH). The control channel may be further used for at least one of the following:

sending an aperiodic channel quality indicator (channel quality indicator, CQI) reporting request, notifying a multicast control channel (multicast control channel, MCCH) change, sending an uplink power control command, and the like.

Optionally, the control channel may be a physical downlink control channel (physical downlink control channel, PDCCH), an enhanced physical downlink control channel (enhanced PDCCH, EPDCCH), a new radio physical downlink control channel (new radio PDCCH, NRPDCCH), or another downlink channel that is defined with network evolution and has the foregoing function, or the like. In addition, the PDCCH mentioned in this application may be a cell-specific reference signal (cell-specific reference signal, CRS)-based PDCCH or a demodulation reference signal (demodulation reference signal, DMRS)-based PDCCH. The CRS-based PDCCH may be a PDCCH demodulated based on a CRS, and the DMRS-based PDCCH may be a PDCCH demodulated based on a DMRS. The CRS is a reference signal (reference signal, RS) configured by the network device for all terminal devices in a cell. The DMRS is an RS configured by the network device for a specific terminal device, and may also be referred to as a terminal device-specific reference signal (UE-specific reference signal, URS).

The control channel may be transmitted on a control channel element (control channel element, CCE). One CCE may include one or more resource element groups (resource element group, REG). One REG may be 12 subcarriers on one symbol. It should be noted that the symbol in this application may be an orthogonal frequency division multiplexing (orthogonal frequency division multiplexing, OFDM) symbol. The subcarrier is a minimum granularity of a frequency domain resource.

5. Resource

The resource mentioned in this application may be one or more of a time domain resource, a frequency domain resource, a code domain resource, a space domain resource, and a power domain resource.

The time domain resource may include, for example, at least one of the following: a frame, a subframe, a slot, a symbol, and the like. In NR, duration of a frame is 10 milliseconds (ms), each frame is divided into 10 subframes, and a length of each subframe is 1 ms. Each subframe is divided into several slots. When a cyclic prefix (cyclic prefix, CP) is a normal cyclic prefix (normal CP, NCP), each slot includes 14 symbols. When a cyclic prefix is an extended cyclic prefix (extended CP, ECP), each slot includes 12 symbols. Certainly, with evolution of communication technologies, a quantity of symbols included in one slot may alternatively be another value. This is not limited in this application.

The frequency domain resource may include, for example, at least one of the following: a subcarrier, a resource block (resource block, RB), a resource block group (resource block group, RBG), a sub-channel (sub-channel), a bandwidth part (bandwidth part, BWP), and a carrier. One resource block is a plurality of contiguous subcarriers in frequency domain. For example, one resource block may include 12 subcarriers. A plurality of resource blocks may form one resource block group. The carrier is a contiguous frequency range that complies with a system specification. The frequency range may be determined based on a center frequency (denoted as a carrier frequency) of the carrier and a bandwidth of the carrier. One carrier may include one bandwidth part. One bandwidth part may include one or more sub-channels, and one sub-channel includes a plurality of resource blocks. The sub-channel may also be referred to as a sub-band.

The code domain resource may include, for example, at least one of the following: a sequence, a cyclic shift, and the like. The sequence may be, for example, a sequence of the CRS or the DMRS, and the cyclic shift may be, for example, a cyclic shift of the CRS or the DMRS.

The space domain resource may include, for example, at least one of the following: a beam, a port, a spatial layer, and the like. The beam may be represented in an NR protocol as a spatial domain filter (spatial domain filter), a spatial filter (spatial filter), or a spatial parameter (spatial parameter). A beam for sending a signal may be referred to as a transmission beam (transmission beam, Tx beam), a spatial domain transmission filter (spatial domain transmission filter), or a spatial transmission parameter (spatial transmission parameter). A beam for receiving a signal may be referred to as a reception beam (reception beam, Rx beam), a spatial domain receive filter (spatial domain receive filter), or a spatial receive parameter (spatial Rx parameter). The port may also be described as an antenna port. The antenna port may be understood as a transmit antenna that can be identified by a receiver device, or a transmit antenna that can be distinguished in space. For example, one antenna port may be one physical antenna in a transmitter device, or may be a weighted combination of a plurality of physical antennas in the transmitter device. The spatial layer may be a data stream that can be independently transmitted.

The power domain resource may include, for example, at least one of the following: a power value, a power range, a power offset, a power threshold, and the like. The power range may include an interval determined based on a largest power value and a smallest power value, and the power range may further include a boundary point or may not include a boundary point, for example, the largest power value and/or the smallest power value.

Generally, a large resource of a control channel may be configured. As a result, a terminal device needs to detect the control channel on the large resource. For example, a frequency domain resource of the control channel is configured by using a resource set of the control channel (control resource set, CORESET), for example, configured by using 6 resource blocks as a granularity and using a 1st resource block of a bandwidth part (bandwidth part, BWP) as a start position. The resource of the control channel may be discretely distributed in the bandwidth part in a bitmap (bitmap) manner, that is, a largest value of the resource of the control channel is the same as a size of the bandwidth part. This means that the terminal device needs to detect the control channel on the entire bandwidth part. In this application, detection may be understood as at least one of the following: monitoring, receiving, demodulation, decoding, or parsing. Detecting the control channel may be understood as monitoring the control channel or receiving the control channel. This increases power consumption of the terminal device in detecting the control channel. Based on this, this application provides an embodiment shown in FIG. 2, to resolve the problem.

The following describes embodiments of this application in detail. Specifically, the terminal device in the following may be the terminal device in FIG. 1, and the network device in the following may be the network device in FIG. 1. It should be noted that names of messages between network elements, names of parameters in the messages, or the like in the following embodiments are merely examples, and there may be other names in a specific implementation. This is not specifically limited in embodiments of this application. Processing performed by a single execution body (the terminal device or the network device) shown in embodiments of this application may alternatively be performed by a plurality of execution bodies. These execution bodies may be logically and/or physically separated. For example, processing performed by the network device may be performed by at least one of a CU, a DU, and an RU.

FIG. 2 shows a communication method according to an embodiment of this application. The communication method includes but is not limited to the following steps.

201: A network device sends configuration information. The configuration information is used to configure a resource of a control channel. A terminal device is in a first state, and a size of the resource of the control channel is less than or equal to a first threshold N1. The terminal device is in a second state, and the size of the resource of the control channel is less than or equal to a second threshold N2. N1 is less than N2.

Correspondingly, the terminal device receives the configuration information.

202: The terminal device detects the control channel on the resource of the control channel.

Correspondingly, the network device sends the control channel on the resource of the control channel.

The following describes specific implementations of step 201 and step 202.

In this application, sending may be understood as direct sending or relay sending, and correspondingly, receiving may be understood as direct receiving or relay receiving. For example, in a possible implementation, in a case of direct sending, step 201 may be understood as follows: The network device sends the configuration information to the terminal device, and correspondingly, the terminal device receives the configuration information from the network device. In another possible implementation, in a case of relay sending, step 201 may be understood as follows: The network device sends the configuration information to the terminal device via a relay device, and correspondingly, the terminal device receives the configuration information from the network device via the relay device. The relay device may be, for example, a relay base station, for example, a micro base station. Alternatively, the relay device may be a relay terminal, for example, an idle terminal. Alternatively, the relay device may be a relay transceiver node, for example, a network entity such as customer premise equipment (customer premise equipment, CPE), a relay transceiver, or a relay agent.

Optionally, the configuration information may be carried in radio resource control (radio resource control, RRC) signaling, a medium access control-control element (medium access control-control element, MAC CE), or a system information block (system information block, SIB).

Optionally, that the terminal device is in the first state may also be described as follows: The terminal device works in the first state. The first state may be implemented in any one or more of the following manners. Details are described as follows:

1. The first state includes at least one of the following: an initial access state, an energy-saving state, a low-rate service transmission state, a high-latency service transmission state, a low-reliability service transmission state, and a default state. The initial access state may be a state of the terminal device in a process of accessing the network device, for example, an idle state, an inactive state, a state of the terminal device before the terminal device reports capability information (the capability information indicates a capability supported by the terminal device), or a state of the terminal device before the terminal device receives dedicated configuration information (for example, physical uplink shared channel (physical uplink shared channel, PUSCH) configuration information) of the terminal device. The energy-saving state may be a low power consumption state. For example, the terminal device transmits no service or transmits a few services. In this case, the terminal device is in the energy-saving state. For another example, a battery level of the terminal device is less than or equal to a first battery level (for example, 20%). In this case, the terminal device is in the energy-saving state. When a data transmission rate in a current service transmission requirement of the terminal device is less than or equal to a first transmission rate (for example, 1 megabit per second (Mbps)), the terminal device is in the low-rate service transmission state. When a latency in the current service transmission requirement of the terminal device is less than or equal to a first latency (for example, 100 ms), the terminal device is in the high-latency service transmission state. When reliability in the current service transmission requirement of the terminal device is less than or equal to first reliability (for example, 60%), the terminal device is in the low-reliability service transmission state. The default state is a connected state, a state of the terminal device before the terminal device reports a high-rate service requirement, or a state of the terminal device before the terminal device reports a low-latency transmission requirement and/or a high-reliability transmission requirement.

2. The first state is a state in which the terminal device supports a first capability, and the first capability includes at least one of the following: a basic capability, a mandatory capability, a default capability, and a low power consumption capability. The basic capability is a basic capability of the terminal device, that is, a capability of the terminal device when the terminal device meets a basic communication requirement. The mandatory capability is a capability that needs to be supported by the terminal device, that is, a capability determined by the network device before the terminal device reports an optional capability. The optional capability is a capability that is optionally supported by the terminal device. For example, the optional capability reported by the terminal device is stronger than the mandatory capability. The default capability is a capability that the network device considers, by default, that the terminal device supports before the terminal device reports capability information. The low power consumption capability is a capability that is supported by the terminal device in the low power consumption state.

Optionally, that the first state is the state in which the terminal device supports the first capability may also be described as follows: The first state is a state in which the terminal device supports a first energy-saving level. The first energy-saving level includes at least one of the following: a basic level, a default level, and a low power consumption level.

Optionally, that the terminal device is in the second state may also be described as follows: The terminal device works in the second state. The second state may be implemented in any one or more of the following manners. Details are described as follows:

1. The second state includes at least one of the following: a data transmission state, a high-rate service transmission state, a low-latency service transmission state, and a high-reliability service transmission state. The data transmission state is a state of the terminal device in a data transmission process, for example, a connected state, a state after the capability information is reported, or a state after the terminal device receives the dedicated configuration information of the terminal device. When the data transmission rate in the current service transmission requirement of the terminal device is greater than or equal to a second transmission rate (for example, 2 megabits per second (Mbps)), the terminal device is in the high-rate service transmission state. Optionally, the first transmission rate is the same as or different from the second transmission rate. When the first transmission rate is the same as the second transmission rate, "equal to" may be used as a condition that the terminal device is in the high-rate service transmission state (that is, when the data transmission rate in the current service transmission requirement of the terminal device is equal to the second transmission rate, the terminal device is in the high-rate service transmission state), or may be used as a condition that the terminal device is in the low-rate service transmission state (that is, when the data transmission rate in the current service transmission requirement of the terminal device is equal to the first transmission rate, the terminal device is in the low-rate service transmission state). When the latency in the current service transmission requirement of the terminal device is less than or equal to a second latency (for example, 200 ms), the terminal device is in the high-latency service transmission state. Optionally, the first latency is the same as or different from the second latency. When the first latency is the same as the second transmission latency, "equal to" may be used as a condition that the terminal device is in the high-latency service transmission state (that is, when the latency in the current service transmission requirement of the terminal device is equal to the second latency, the terminal device is in the high-latency service transmission state), or may be used as a condition that the terminal device is in the low-latency service transmission state (that is, when the latency in the current service transmission requirement of the terminal device is equal to the first latency, the terminal device is in the low-latency service transmission state). When the reliability in the current service transmission requirement of the terminal device is higher than or equal to second reliability (for example, 90%), the terminal device is in the high-reliability service transmission state. Optionally, the first reliability is the same as or different from the second reliability. When the first reliability is the same as the second reliability, "equal to" may be used as a condition that the terminal device is in the high-reliability service transmission state (that is, when the reliability in the current service transmission requirement of the terminal device is equal to the second reliability, the terminal device is in the high-reliability service transmission state), or may be used as a condition that the terminal device is in the low-reliability service transmission state (that is, when the reliability in the current service transmission requirement of the terminal device is equal to the first reliability, the terminal device is in the low-reliability service transmission state).

2. The second state is a state in which the terminal device supports a second capability, and the second capability includes at least one of the following: a non-basic capability, an optional capability, and a high power consumption capability. The non-basic capability is a high-order capability of the terminal device, that is, a capability that is met when the terminal device meets a high communication requirement. The high power consumption capability is a capability that is supported by the terminal device in the high power consumption state. The high power consumption state is relative to the low power consumption state. For example, the battery level of the terminal device is greater than or equal to a second battery level (for example, 60%). In this case, the terminal device is in the high power consumption state. Optionally, the first battery level is the same as or different from the second battery level. When the first power level is the same as the second power level, "equal to" may be used as a condition that the terminal device is in the low power consumption state (that is, when the power level of the terminal device is equal to the second power level, the terminal device is in the high power consumption state), or may be used as a condition that the terminal device is in the high power consumption state (that is, when the power level of the terminal device is equal to the first power level, the terminal device is in the low power consumption state).

Optionally, that the second state is the state in which the terminal device supports the second capability may also be described as follows: The second state is a state in which the terminal device supports a second energy-saving level. The second energy-saving level includes at least one of the following: a non-basic level, an optional level, and a high power consumption level.

The network device may learn of, in the following manner, a specific state of the terminal device. Details are described as follows:

The network device receives first information. In a possible implementation, the first information is used to determine that the terminal device expects to work in the first state or the second state. In another possible implementation, the first information is used to determine a first service requirement and/or a first transmission requirement of the terminal device, or the first information is used to determine a second service requirement and/or a second transmission requirement of the terminal device. The first service requirement includes a low-rate service requirement. The first transmission requirement includes a high-latency transmission requirement and/or a low-reliability transmission requirement. The second service requirement includes a high-rate service requirement. The second transmission requirement includes a low-latency transmission requirement and/or a high-reliability transmission requirement. In this way, the network device may learn of a state of the terminal device by determining a service requirement and/or a transmission requirement of the terminal device. Optionally, the first information may be carried in radio resource control signaling, a physical random access channel (physical random access channel, PRACH), a physical uplink shared channel, uplink control information (uplink control information, UCI), or a medium access control-control element.

The first information may be implemented in the following manners.

1. The first information is single information. Different values of the first information or different values of a part of bits in the first information indicate that the first information is used to determine that a state in which the terminal device expects to work is the first state or the second state, is used to determine that a service requirement of the terminal device is the first service requirement or the second service requirement, or is used to determine that a transmission requirement of the terminal device is the first transmission requirement or the second transmission requirement. For example, one bit in the first information may indicate that the terminal device expects to work in the first state or the second state. For example, a state of the bit is 1, to indicate that the terminal device expects to work in the first state. For example, a state of the bit is 0, to indicate that the terminal device expects to work in the second state, and vice versa. In another example, one bit in the first information may be used to determine the service requirement and/or the transmission requirement of the terminal device. For example, a state of the bit is 1, to indicate the first service requirement and/or the first transmission requirement. For example, a state of the bit is 0, to indicate the second service requirement and/or the second transmission requirement, and vice versa.

2. The first information is one of second information and third information. Herein, it should be understood that the network device may receive the second information, or may receive the third information. In other words, it may also be described as follows: The network device receives the second information and the third information. In a possible implementation, the second information is used to determine that the terminal device expects to work in the first state, and the third information is used to determine that the terminal device expects to work in the second state. In another possible implementation, the second information is used to determine the first service requirement and/or the first transmission requirement of the terminal device, and the third information is used to determine the second service requirement and/or the second transmission requirement of the terminal device. The network device determines, based on that the terminal device sends the second information or the third information, that the state of the terminal device is the first state or the second state, that the service requirement of the terminal device is the first service requirement or the second service requirement, or that the transmission requirement of the terminal device is the first transmission requirement or the second transmission requirement.

3. The first information is single information. In a possible implementation, transmission of the first information indicates that the state that the terminal device expects to work is the first state, the service requirement of the terminal device is the first service requirement, or the transmission requirement of the terminal device is the first transmission requirement, and no transmission of the first information indicates that the state that the terminal device expects to work is the second state, the service requirement of the terminal device is the second service requirement, or the transmission requirement of the terminal device is the second transmission requirement. In other words, it may also be described as follows: The network device receives the second information; and vice versa. In this case, it may be described as follows: The network device receives the third information. In other words, the network device determines the state, the service requirement, or the transmission requirement of the terminal device based on whether the terminal device sends the second information or the third information, or receives the second information or the third information. For example, the terminal device may not send the second information. In other words, the network device does not receive the second information. In this way, the network device may learn that the terminal device is in the first state. For another example, the terminal device may send the second information. In other words, the network device receives the second information. In this way, the network device may learn that the terminal device is in the second state.

It can be learned that in any one of the foregoing manners 1 to 3, the network device may learn of a specific state in which the terminal device expects to work, or a current service requirement or transmission requirement of the terminal device, and may further learn of a specific threshold to which the size of the resource of the control channel should be limited. In this way, the size of the resource of the control channel can be more flexibly limited, so that the terminal device can detect the control channel on the resource of the control channel whose size is limited, to reduce power consumption of the terminal device in detecting the control channel.

It should be noted that in the embodiment shown in FIG. 2, the resource of the control channel may be a time domain resource, a frequency domain resource, a code domain resource, a space domain resource, or a power domain resource of the control channel. In other words, "a terminal device is in a first state, and a size of the resource of the control channel is less than or equal to N1" in step 201 may be understood as one of the following: The terminal device is in the first state, and a size of the time domain resource of the control channel is less than or equal to N1, a size of the frequency domain resource of the control channel is less than or equal to N1, a size of the code domain resource of the control channel is less than or equal to N1, a size of the space domain resource of the control channel is less than or equal to N1, or a size of the power domain resource of the control channel is less than or equal to N1. Similarly, "the terminal device is in a second state, and the size of the frequency domain resource of the control channel is less than or equal to N2" in step 201 may be understood as one of the following: The terminal device is in the second state, and the size of the time domain resource of the control channel is less than or equal to N2, the size of the frequency domain resource of the control channel is less than or equal to N2, the size of the code domain resource of the control channel is less than or equal to N2, the size of the space domain resource of the control channel is less than or equal to N2, or the size of the power domain resource of the control channel is less than or equal to N2. For different types of resources, values of N1 may be the same or different, and values of N2 may also be the same or different. Optionally, in the embodiment shown in FIG. 2, the resource of the control channel may alternatively include at least two of the time domain resource, the frequency domain resource, the code domain resource, the space domain resource, and the power domain resource of the control channel. In this case, the terminal device is in the first state, and a size of a resource of the control channel is less than or equal to corresponding N1. The terminal device is in the second state, and the size of the resource is less than or equal to corresponding N2. For example, the resource of the control channel includes the time domain resource and the frequency domain resource of the control channel. The terminal device is in the first state, the size of the time domain resource of the control channel is less than or equal to corresponding N1, and the size of the frequency domain resource of the control channel is less than or equal to corresponding N1. The terminal device is in the second state, the size of the time domain resource of the control channel is less than or equal to corresponding N2, and the size of the frequency domain resource of the control channel is less than or equal to corresponding N2.

The following describes N1 and N2 by using an example. Details are described as follows:

1. N1 is a predefined value or a preconfigured value, or N1 is indicated by first signaling. For example, N1 is predefined or preconfigured as a value greater than 0, for example, 20 megahertz (MHz). It should be noted that signaling (for example, the first signaling) in this application may be radio resource control signaling (for example, terminal capability information (UE capability information) signaling), a physical random access channel, uplink control information, a medium access control-control element, or the like. N1 mentioned in the embodiment shown in FIG. 2 is indicated by signaling (for example, the first signaling), which may be understood as that N1 is indicated by the terminal device to the network device by using the signaling.

2. N2 is a predefined value or a preconfigured value, or N2 is indicated by second signaling. For example, N2 is predefined or preconfigured as a value greater than 0, for example, 100 MHz. It should be noted that N2 mentioned in the embodiment shown in FIG. 2 is indicated by signaling (for example, the second signaling), which may be understood as that N2 is indicated by the terminal device to the network device by using the signaling. Optionally, the first signaling and the second signaling may be same signaling or different signaling.

3. N1 and N2 have a multiple relationship. In a possible implementation, N1 is determined based on N2 and a first value X. For example, N1=N2/X or N1=N2*X. Herein, "/" indicates division, and "*" indicates multiplication. N2 is a predefined or preconfigured value, and N2 is predefined or preconfigured as a value greater than 0. X may be a predefined value or a preconfigured value, or X is indicated by third signaling. For example, X is predefined or preconfigured as a value greater than 0. For example, X is 5, N2 is 100 MHz, and N1=100 MHz/5=20 MHz. In another possible implementation, N2 is determined based on N1 and X, for example, N1=N2/X or N1=N2*X. N1 is a predefined or preconfigured value, and N1 is predefined or preconfigured as a value greater than 0. For example, X is 5, N1 is 20 MHz, and N2=20 MHz*5=100 MHz.

It may be understood that in this application, Q MHz may be a size of a frequency domain resource corresponding to Q MHz, and Q is a positive number. For example, 20 MHz may be understood as a quantity of resource blocks corresponding to 20 MHz, for example, 100 RBs, 106 RBs, or 51 RBs. For another example, 20 MHz may be understood as a quantity of control channel elements corresponding to 20 MHz, for example, 16 CCEs or 24 CCEs.

Optionally, when the resource of the control channel is the frequency domain resource of the control channel (that is, the terminal device is in the first state, and the size of the frequency domain resource of the control channel is less than or equal to N1; and the terminal device is in the second state, and the size of the frequency domain resource of the control channel is less than or equal to N2), N1 and N2 may be implemented in any one of the following manners. Details are described as follows:

1. N1 and N2 are different predefined values in a same frequency band. For example, N1 and N2 are different predefined values greater than 0 in a same frequency band. The frequency band herein may be a frequency band 1 (frequency band 1, FR1), a frequency band 2 (frequency band 2, FR2), a frequency band in the FR1, a frequency band in the FR2, or the like. The FR1 ranges from 410 MHz to 7125 MHz, and is usually referred to as a low frequency. The FR2 ranges from 24250 MHz to 52600 MHz and is usually referred to as a millimeter wave band or a high frequency. A frequency band in the FR1 may be a C band, an X band, or the like. The C band ranges from 4 GHz to 8 GHz, and the X band ranges from 8 GHz to 12 GHz. Optionally, in different frequency bands, values of N1 are different. Similarly, in different frequency bands, values of N2 may also be different.

2. N1 is determined based on a maximum bandwidth supported by the terminal device and a second value Y1. N2 is determined based on the maximum bandwidth supported by the terminal device and a third value Y2. For example, N1 may be the maximum bandwidth supported by the terminal device/Y1, and N2 may be the maximum bandwidth supported by the terminal device/Y2. Optionally, the maximum bandwidth supported by the terminal device may include at least one of the following: a channel bandwidth, a communication bandwidth, a radio frequency bandwidth, a baseband bandwidth, and the like. In a possible implementation, Y1 and Y2 are different predefined or preconfigured values. For example, Y1 and Y2 are different predefined or preconfigured values greater than 0. In another possible implementation, Y1 and Y2 are different values in a first set. The first set is a predefined or preconfigured set, or the first set is indicated by fourth signaling. It should be noted that a set (for example, the first set) in the embodiment shown in FIG. 2 is indicated by signaling (for example, the fourth signaling), which may be understood as that the set is indicated by the terminal device to the network device by using the signaling. Optionally, a value in the first set may be greater than 0. For example, the first set is {1, 2, 3, 4, 5, 6, 8, 10}.

3. N1 is determined based on a first parameter set, and the first parameter set includes at least one of the following parameters: a bandwidth part of the control channel and a subcarrier spacing of a carrier of the control channel. N2 may be a predefined value or a preconfigured value. For example, N2 is predefined or preconfigured as a value greater than 0. Alternatively, N2 is a maximum bandwidth supported by the terminal device. Alternatively, N2 is indicated by second signaling, or the like.

It should be noted that in this application, the bandwidth part may be understood as at least one of the following: a maximum operating bandwidth of the terminal device, a maximum bandwidth of the terminal device in a connected state, and a maximum bandwidth of the terminal device for data transmission. Optionally, the bandwidth part may be less than or equal to the maximum bandwidth supported by the terminal device.

That N1 is determined based on the first parameter set is described below by using an example. Details are described as follows:

1. N1 is determined based on the bandwidth part of the control channel and a fourth value A. For example, N1 is a smaller one of the bandwidth part of the control channel and the fourth value A. A is a predefined or preconfigured value. For example, A is a predefined or preconfigured value greater than 0, or A is indicated by fifth signaling. Optionally, A may be, for example, 17.28 MHz, 20 MHz, or 96 RBs.

2. A size of the bandwidth part of the control channel belongs to a first bandwidth set, and N1 is less than or equal to A. The first bandwidth set is a predefined or preconfigured set, or the first bandwidth set is indicated by sixth signaling. Optionally, the terminal device may set a plurality of bandwidth sets (the plurality of bandwidth sets include the first bandwidth set, and the plurality of bandwidth sets do not overlap). When the size of the bandwidth part of the control channel belongs to different bandwidth sets in the plurality of bandwidth sets, values of A may be different. For example, the plurality of bandwidth sets include the first bandwidth set and a second bandwidth set, and the size of the bandwidth part of the control channel belongs to the first bandwidth set. For example, A may be 17.28 MHz, 20 MHz, or 96 RBs. The size of the bandwidth part of the control channel belongs to a second bandwidth set. For example, A may be 34.56 MHz, 40 MHz, or 192 RBs. Optionally, the plurality of bandwidth sets do not overlap. For example, it may be understood as that sizes of bandwidths included in different bandwidth sets in the plurality of bandwidth sets have an association relationship. For example, the plurality of bandwidth sets include the first bandwidth set and the second bandwidth set, and sizes of bandwidths included in the first bandwidth set are all greater than sizes of bandwidths included in the second bandwidth set, or sizes of bandwidths included in the first bandwidth set are all less than sizes of bandwidths included in the second bandwidth set.

3. N1 is determined based on the size of the bandwidth part of the control channel/n. For example, N1=floor(the size of the bandwidth part of the control channel/n). floor indicates rounding down, and n is a predefined or preconfigured value. For example, n is a predefined or preconfigured value greater than 0, or n is indicated by seventh signaling. Optionally, n may be, for example, 4 or 5. For another example, N1=floor(floor(the size of the bandwidth part of the control channel/6)*6/n). In this case, N1 may be an integer multiple of the control channel element.

4. The subcarrier spacing of the carrier of the control channel belongs to a first subcarrier spacing set. N1 is less than or equal to A, and the first subcarrier spacing set is a predefined or preconfigured set, or the first subcarrier spacing set is indicated by eighth signaling. Optionally, the terminal device may set a plurality of subcarrier spacing sets (the plurality of subcarrier spacing sets include the first subcarrier spacing set, and the plurality of subcarrier spacing sets do not overlap). When the subcarrier spacing of the carrier of the control channel belongs to different subcarrier spacing sets in the plurality of subcarrier spacing sets, values of A may be different. For example, the plurality of subcarrier spacing sets include a subcarrier spacing set 1 (the subcarrier spacing set 1 is {30 kilohertz (kHz), 60 kHz}) and a subcarrier spacing set 2 (the subcarrier spacing set 2 is {120 kHz, 122 kHz}). The subcarrier spacing of the carrier of the control channel belongs to the subcarrier spacing set 1. For example, A may be 17.28 MHz, 20 MHz, or 96 RBs. The subcarrier spacing of the carrier of the control channel belongs to the subcarrier spacing set 2. For example, A may be 34.56 MHz, 40 MHz, or 192 RBs. Optionally, the plurality of subcarrier spacing sets do not overlap. For example, it may be understood as that subcarrier spacings included in different subcarrier spacing sets in the plurality of subcarrier spacing sets have an association relationship. For example, the plurality of subcarrier spacing sets include the subcarrier spacing set 1 and the subcarrier spacing set 2, and all subcarrier spacings included in the subcarrier spacing set 1 are greater than subcarrier spacings included in the subcarrier spacing set 2, or all subcarrier spacings included in the subcarrier spacing set 1 are less than subcarrier spacings included in the subcarrier spacing set 2.

It can be learned that in any one of the foregoing manners 1 to 3, N1 is related to the bandwidth part of the control channel, and the size of the resource of the control channel is less than or equal to N1. In this way, an energy-saving requirement of the terminal device can be met, a more proper resource can be adapted based on a bandwidth requirement, and a service requirement can be better adapted. In the foregoing manner 4, N1 is related to the subcarrier spacing of the carrier of the control channel. A larger subcarrier spacing indicates a larger bandwidth occupied by a resource element or a subcarrier, and therefore, a larger bandwidth occupied by the control channel. If a same limitation is set on the size of the resource of the control channel in different subcarrier spacings, the size of the resource of the control channel may be insufficient in a case of a large subcarrier spacing.

It should be noted that any one of the foregoing manners 1 to 4 may be independently used as an implementation of determining N1 based on the first parameter set. Alternatively, a combination of at least two of the foregoing manners 1 to 4 may be used as an implementation of determining N1 based on the first parameter set. For example, the size of the bandwidth part of the control channel belongs to the first bandwidth set, and N1 is a smaller one of the bandwidth part of the control channel and the fourth value A. For another example, the subcarrier spacing of the carrier of the control channel belongs to the first subcarrier spacing set, and N1 is a smaller one of the bandwidth part of the control channel and the fourth value A. The foregoing provides merely several simple examples, and there are other combination manners. This is not limited in this application.

Optionally, when the resource of the control channel is the time domain resource of the control channel (that is, the terminal device is in the first state, and the size of the time domain resource of the control channel is less than or equal to N1; and the terminal device is in the second state, and the size of the time domain resource of the control channel is less than or equal to N2), N1 may be determined based on a second parameter set. The second parameter set includes at least one of the following: a quantity of time units in the time domain resource of the control channel and a subcarrier spacing of a carrier of the control channel. The time unit herein may be, for example, a symbol. A unit of N2 may be a subframe, a slot, a sub-slot, a symbol, or the like. N2 may be a positive number. For example, N2 may be one slot, one sub-slot, or three symbols. One sub-slot may include, for example, four symbols.

That N1 is determined based on the second parameter set is described below by using an example. Details are described as follows:

1. The subcarrier spacing of the carrier of the control channel belongs to the second subcarrier spacing set, and N1 is less than or equal to a fifth value B. B is a predefined or preconfigured value. For example, B is a predefined or preconfigured value greater than 0, or B is indicated by ninth signaling. Optionally, B may be 3, 4, 5, or 6. The second subcarrier spacing set is a predefined or preconfigured set, or the second subcarrier spacing set is indicated by tenth signaling. The terminal device may set a plurality of subcarrier spacing sets (the plurality of subcarrier spacing sets include the second subcarrier spacing set, and the plurality of subcarrier spacing sets do not overlap). When the subcarrier spacing of the carrier of the control channel belongs to different subcarrier spacing sets in the plurality of subcarrier spacing sets, values of B may be different. For example, the plurality of subcarrier spacing sets include a subcarrier spacing set 3 and a subcarrier spacing set 4. The subcarrier spacing of the carrier of the control channel belongs to the subcarrier spacing set 3. For example, B may be 3. The subcarrier spacing of the carrier of the control channel belongs to the subcarrier spacing set 4. For example, B may be 4, 5, or 6. Optionally, the plurality of subcarrier spacing sets do not overlap. For example, it may be understood as that subcarrier spacings included in different subcarrier spacing sets in the plurality of subcarrier spacing sets have an association relationship. For example, the plurality of subcarrier spacing sets include the subcarrier spacing set 3 and the subcarrier spacing set 4, and all subcarrier spacings included in the subcarrier spacing set 3 are greater than subcarrier spacings included in the subcarrier spacing set 4, or all subcarrier spacings included in the subcarrier spacing set 3 are less than subcarrier spacings included in the subcarrier spacing set 4.

2. The quantity of time units in the time domain resource of the control channel belongs to a second set, and N1 is less than or equal to B. The second set is a predefined or preconfigured set, or the second set is indicated by eleventh signaling. The terminal device may set a plurality of sets (the plurality of sets include the second set, and the plurality of sets do not overlap). When the quantity of time units in the time domain resource of the control channel belongs to different sets in the plurality of sets, values of B may be different. For example, the plurality of sets include a set 1 and a set 2. The quantity of time units in the time domain resource of the control channel belongs to the set 1, and B may be, for example, 3. The quantity of time units in the time domain resource of the control channel belongs to the set 2, and B may be, for example, 4, 5, or 6. Optionally, for example, that the plurality of sets do not overlap may be understood as that quantities of time units included in different sets in the plurality of sets have an association relationship. For example, the plurality of sets include the set 1 and the set 2. A quantity of time units included in the set 1 is greater than a quantity of time units included in the set 2. For example, the quantity of time units included in the set 1 is greater than 3, and the quantity of time units included in the set 2 is less than or equal to 3. Alternatively, the quantity of time units included in the set 1 is less than the quantity of time units included in the set 2. For example, the quantity of time units included in the set 1 is less than or equal to 3, and the quantity of time units included in the set 2 is greater than 3.

It should be noted that either of the foregoing manners 1 and 2 may be independently used as an implementation of determining N1 based on the second parameter set. Alternatively, a combination of the manner 1 and the manner 2 may be used as an implementation of determining N1 based on the second parameter set. For example, the subcarrier spacing of the carrier of the control channel belongs to the second subcarrier spacing set, and the quantity of time units in the time domain resource of the control channel belongs to the second set, where N1 is less than or equal to B.

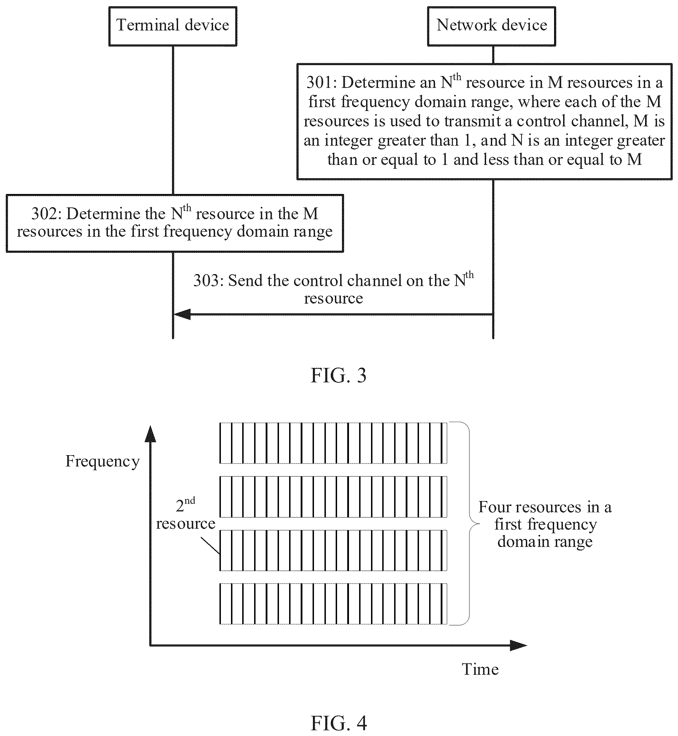

Generally, a network device may indicate a resource of a control channel by using signaling, so that a terminal device can detect the control channel on the resource. However, this may cause excessively high signaling overheads. Based on this, this application provides an embodiment shown in FIG. 3, to resolve the problem.

FIG. 3 shows another communication method according to an embodiment of this application. The communication method includes but is not limited to the following steps.

301: A network device determines an $N^{th}$ resource in M resources in a first frequency domain range, where each of the M resources is used to transmit a control channel, M is an integer greater than 1, and N is an integer greater than or equal to 1 and less than or equal to M.

302: A terminal device determines the $N^{th}$ resource in the M resources in the first frequency domain range.

303: The network device sends the control channel on the $N^{th}$ resource.

Correspondingly, the terminal device detects the control channel on the $N^{th}$ resource.

The following describes specific implementations of step 301 to step 303.

The resource mentioned in the embodiment shown in FIG. 3 is a frequency domain resource.

M may be implemented in either of the following manners. Details are described as follows:

1. M is related to a size of the first frequency domain range. The first frequency domain range is a frequency domain resource configured by the network device, for example, a bandwidth part, a carrier, a sub-band, or a resource block group. For example, M is in direct proportion to the size of the first frequency domain range. For example, the size of the first frequency domain range is 100 MHz, and M is 4. Alternatively, the size of the first frequency domain range is 200 MHz, and M is 8. For another example, M=floor(the size of the first frequency domain range/L), where floor indicates rounding down. L is a predefined value or a preconfigured value. For example, L is a predefined or preconfigured value greater than 0. Alternatively, L is indicated by second signaling. Optionally, L may be 20 MHz.

2. M is indicated by first signaling. For example, M is indicated by the terminal device to the network device by using the first signaling. For example, M is a smallest quantity K of resources in the first frequency domain range. K is in direct proportion to the size of the first frequency domain range. For example, the size of the first frequency domain range is 100 MHz, and K is 4. Alternatively, the size of the first frequency domain range is 200 MHz, and K is 8. Optionally, the first signaling may be further used to configure a related parameter of the bandwidth part, for example, a size of the bandwidth part, a frequency domain position of the bandwidth part, and the like.

It can be learned that in either of the implementations 1 and 2, a value of M is determined, so that the terminal device can learn of a quantity of resources included in the first frequency domain range, and further determine a specific resource on which the terminal device should detect the control channel. In this way, the network device does not notify, by using signaling, the terminal device of the specific resource on which the control channel should be detected, to reduce signaling overheads.

In a possible implementation, N is determined based on identification information of the terminal device and M. The identification information of the terminal device may be, for example, a network temporary identifier (radio network temporary identity, RNTI). For example, N=mod(the identification information of the terminal device, M), where mod indicates a modulo operation. In another possible implementation, N is indicated by third signaling. Optionally, the third signaling and the first signaling may be same signaling or different signaling. In another possible implementation, a start position of the $N^{th}$ resource is determined based on the size of the first frequency domain range and M. For example, the start position of the $N^{th}$ resource =floor(the size of the first frequency domain range/M)*(N-1); or the start position of the $N^{th}$ resource=floor(floor(the size of the first frequency domain range/6)*6/M)*(N-1). It can be learned that, a value of N is determined, so that the terminal device can learn of the specific resource on which the control channel should be detected. In this way, the network device does not notify, by using the signaling, the terminal device of the specific resource on which the control channel should be detected, to reduce signaling overheads.

The following uses an example to describe "the network device sends the control channel on the $N^{th}$ resource" with reference to FIG. 4. As shown in FIG. 4, the first frequency domain range includes four resources (that is, M is 4), and the network device sends the control channel on a $2^{nd}$ resource (that is, N is 2).

The foregoing mainly describes the solutions provided in this application from the perspective of interaction between devices. It may be understood that in the foregoing implementations, to implement the foregoing functions, each device includes a corresponding hardware structure and/or software module for performing each function. A person skilled in the art should be easily aware that units, algorithms, and steps in the examples described with reference to embodiments disclosed in this specification can be implemented in a form of hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the terminal device or the network device may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division during actual implementation.

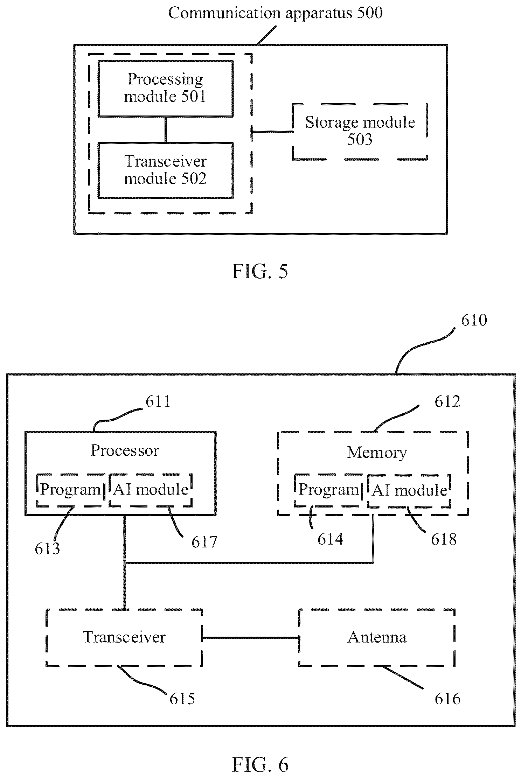

FIG. 5 is a diagram of a structure of a communication apparatus according to an embodiment of this application. The communication apparatus 500 may be used in the method shown in the embodiment in FIG. 2 or FIG. 3. As shown in FIG. 5, the communication apparatus 500 includes a processing module 501 and a transceiver module 502. The processing module 501 may be one or more processors, and the transceiver module 502 may be a transceiver or a communication interface. The communication apparatus may be configured to implement a function of the terminal device or the network device in any one of the foregoing method embodiments, or configured to implement a function of a network element in any one of the foregoing method embodiments. The network element or network function may be a network element in a hardware device, a software function running on dedicated hardware, or a virtualization function instantiated on a platform (for example, a cloud platform). Optionally, the communication apparatus 500 may further include a storage module 503, and is configured to store program code and data of the communication apparatus 500.

In an instance, when the communication apparatus is used as a terminal device or a chip used in the terminal device, and performs the steps performed by the terminal device in the foregoing method embodiments, the transceiver module 502 is specifically configured to perform a sending action and/or a receiving action performed by the terminal device in the embodiment in FIG. 2 or FIG. 3, for example, support the terminal device in performing another process of the technology described in this specification; and the processing module 501 may be configured to support the communication apparatus 500 in performing a processing action in the foregoing method embodiments, for example, support the terminal device in performing another process of the technology described in this specification.

For example, the transceiver module 502 is configured to receive configuration information, where the configuration information is used to configure a resource of a control channel; a terminal device is in a first state, and a size of the resource of the control channel is less than or equal to a first threshold N1; the terminal device is in a second state, and the size of the resource of the control channel is less than or equal to a second threshold N2 ; and N1 is less than N2; and detect the control channel on the resource of the control channel.

Optionally, the transceiver module 502 is further configured to send first information, where the first information is used to determine that the terminal device expects to work in the first state or the second state, the first information is used to determine a first service requirement and/or a first transmission requirement of the terminal device, or the first information is used to determine a second service requirement and/or a second transmission requirement of the terminal device; the first service requirement includes a low rate, and the first transmission requirement includes a high latency and/or a low reliability; and the second service requirement includes a high rate, and the second transmission requirement includes a low latency and/or a high reliability.

For another example, the processing module 501 is configured to determine an $N^{th}$ resource in M resources in a first frequency domain range, where each of the M resources is used to transmit a control channel, M is an integer greater than 1, and N is an integer greater than or equal to 1 and less than or equal to M; and the transceiver module 502 is configured to detect the control channel on the $N^{th}$ resource.

In another instance, when the communication apparatus is used as a network device or a chip used in the network device, and performs the steps performed by the network device in the foregoing method embodiments, the transceiver module 502 is specifically configured to perform a sending action and/or a receiving action performed by the network device in the embodiment in FIG. 2 or FIG. 3, for example, support the network device in performing another process of the technology described in this specification; and the processing module 501 may be configured to support the communication apparatus 500 in performing a processing action in the foregoing method embodiments, for example, support the network device in performing another process of the technology described in this specification.

For example, the transceiver module 502 is configured to send configuration information, where the configuration information is used to configure a resource of a control channel; a terminal device is in a first state, and a size of the resource of the control channel is less than or equal to a first threshold N1; the terminal device is in a second state, and the size of the resource of the control channel is less than or equal to a second threshold N2; and N1 is less than N2; and send the control channel on the resource of the control channel.

Optionally, the transceiver module 502 is further configured to receive first information, where the first information is used to determine that the terminal device expects to work in the first state or the second state, the first information is used to determine a first service requirement and/or a first transmission requirement of the terminal device, or the first information is used to determine a second service requirement and/or a second transmission requirement of the terminal device; the first service requirement includes a low rate, and the first transmission requirement includes a high latency and/or low reliability; and the second service requirement includes a high rate, and the second transmission requirement includes a low latency and/or high reliability.

For another example, the processing module 501 is configured to determine an $N^{th}$ resource in M resources in a first frequency domain range, where each of the M resources is used to transmit a control channel, M is an integer greater than 1, and N is an integer greater than or equal to 1 and less than or equal to M; and the transceiver module 502 is configured to send the control channel on the $N^{th}$ resource.

In a possible implementation, when the terminal device or the network device is a chip, the transceiver module 502 may be a communication interface, a pin, a circuit, or the like. The communication interface may be configured to input to-be-processed data to a processor, and may output a processing result of the processor to the outside. During specific implementation, the communication interface may be a general purpose input/output (general purpose input/output, GPIO) interface, and may be connected to a plurality of peripheral devices (for example, a display (LCD), a camera (camera), a radio frequency (radio frequency, RF) module, and an antenna). The communication interface is connected to the processor through a bus.

The processing module 501 may be a processor. The processor may execute computer-executable instructions stored in the storage module, so that the chip performs the method in the embodiment shown in FIG. 2 or FIG. 3. Further, the processor may include a controller, an arithmetic logic unit, and a register. For example, the controller is mainly responsible for instruction decoding, and transmitting a control signal for an operation corresponding to the instructions. The arithmetic logic unit is mainly responsible for performing a fixed-point or floating-point arithmetic operation, a shift operation, a logic operation, and the like, and may also perform an address operation and address translation. The register is mainly responsible for saving a quantity of register operations, intermediate operation results, and the like that are temporarily stored during instruction execution. During specific implementation, a hardware architecture of the processor may be an ASIC architecture, a microprocessor without interlocked piped stages (microprocessor without interlocked piped stages architecture, MIPS) architecture, an advanced reduced instruction set computer machines (advanced RISC machines, ARM) architecture, a second processor (network processor, NP) architecture, or the like. The processor may be a single-core or multi-core processor. The storage module may be a storage module inside the chip, for example, a register or a cache. Alternatively, the storage module may be a storage module outside the chip, for example, a ROM, another type of static storage device that can store static information and instructions, or a RAM.

It should be noted that functions respectively corresponding to the processor and the interface may be implemented by using a hardware design, or may be implemented by using a software design, or may be implemented by using a combination of software and hardware. This is not limited herein.

FIG. 6 is a diagram of a structure of another communication apparatus according to an embodiment of this application. It may be understood that the communication apparatus 610 includes means in necessary forms, such as modules, units, elements, circuits, or interfaces, which are appropriately configured together to perform the solution. The communication apparatus 610 may be the foregoing terminal device or network device, or may be a component (for example, a chip) in these devices, to implement the method described in the foregoing method embodiments. The communication apparatus 610 includes one or more processors 611. The processor 611 may be a general-purpose processor, a dedicated processor, or the like. For example, the processor may be a baseband processor or a central processing unit. The baseband processor may be configured to process a communication protocol and communication data. The central processing unit may be configured to control the communication apparatus (for example, the terminal device, the network device, or the chip), to execute a software program and process data of the software program.

Optionally, in a design, the processor 611 may include a program 613 (which may also be referred to as code or instructions sometimes), and the program 613 may be run on the processor 611, so that the communication apparatus 610 performs the method described in the foregoing embodiments. In another possible design, the communication apparatus 610 includes a circuit (not shown in FIG. 6), and the circuit is configured to implement a function of the terminal device, the network device, or the like in the foregoing embodiments. Optionally, the communication apparatus 610 may include one or more memories 612 storing a program 614 (which may also be referred to as code or instructions sometimes). The program 614 may be run on the processor 611, so that the communication apparatus 610 performs the method described in the foregoing method embodiments.

Optionally, the processor 611 and/or the memory 612 may include an AI module 617 and an AI module 618. The AI module is configured to implement an AI-related function. The AI module may be implemented by using software, hardware, or a combination of software and hardware. For example, the AI module may include an RIC module. For example, the AI module may be a near-real-time RIC or a non-real-time RIC. Optionally, the processor 611 and/or the memory 612 may further store data. The processor and the memory may be separately disposed, or may be integrated together.

Optionally, the communication apparatus 610 may further include a transceiver 615 and/or an antenna 616. The processor 611 may also be sometimes referred to as a processing unit, and controls the communication apparatus (for example, the terminal device or the network device). The transceiver 615 may also be sometimes referred to as a transceiver unit, a transceiver machine, a transceiver circuit, a transceiver, or the like, and is configured to implement receiving and sending functions of the communication apparatus through the antenna 616.

An embodiment of this application further provides a communication apparatus. The communication apparatus includes at least one processor and a memory. The memory is configured to store a computer program or instructions. The at least one processor is configured to execute the computer program or the instructions in the memory, so that the method in the embodiment in FIG. 2 or FIG. 3 is performed.

An embodiment of this application further provides a computer-readable storage medium. The computer-readable storage medium stores computer instructions. When the computer instructions are executed, a computer is enabled to perform the method in the embodiment in FIG. 2 or FIG. 3.

An embodiment of this application further provides a computer program product. The computer program product includes computer program code. When the computer program code is run on a computer, the computer is enabled to perform the method in the embodiment in FIG. 2 or FIG. 3.

An embodiment of this application further provides a chip. The chip includes at least one processor and an interface. The processor is configured to read and execute instructions stored in a memory. When the instructions are run, the chip is enabled to perform the method in the embodiment in FIG. 2 or FIG. 3.

The units described as separate parts may or may not be physically separate, and parts displayed as units may or may not be physical units, and may be located in one position, or may be distributed on a plurality of network units. Some or all of the units may be selected based on an actual requirement, to achieve the objectives of the solutions in embodiments of this application. In addition, network element units in embodiments of this application may be integrated into one processing unit, each of the units may exist alone physically, or two or more units are integrated into one unit. The integrated unit may be implemented in a form of hardware, or may be implemented in a form of a software network element unit.

When the integrated unit is implemented in the form of the software network element unit and sold or used as an independent product, the integrated unit may be stored in a computer-readable storage medium. Based on such an understanding, a part that essentially contributes to the technical solutions of this application or all or a part of the technical solutions may be embodied in a form of a software product. The computer software product is stored in a storage medium, and includes several instructions for enabling a computer device (which may be a personal computer, a terminal device, a cloud server, a network device, or the like) to perform all or some steps of the methods in embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc. The foregoing descriptions are merely specific implementations of this application, but the protection scope of this application is not limited thereto. Various equivalent modifications or replacements readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   receiving configuration information, wherein the configuration information is used to configure a resource of a control channel; a terminal device is in a first state, and a size of the resource of the control channel is less than or equal to a first threshold N1; the terminal device is in a second state, and the size of the resource of the control channel is less than or equal to a second threshold N2; and N1 is less than N2; and
   detecting the control channel on the resource of the control channel.

2. A communication method, comprising:

   sending configuration information, wherein the configuration information is used to configure a resource of a control channel; a terminal device is in a first state, and a size of the resource of the control channel is less than or equal to a first threshold N1; the terminal device is in a second state, and the size of the resource of the control channel is less than or equal to a second threshold N2; and N1 is less than N2; and
   sending the control channel on the resource of the control channel.

3. The method according to claim 1, wherein before receiving the configuration information, the method further comprises:

   sending first information, wherein the first information is used to determine that the terminal device expects to work in the first state or the second state, the first information is used to determine a first service requirement and/or a first transmission requirement of the terminal device, or the first information is used to determine a second service requirement and/or a second transmission requirement of the terminal device;
   the first service requirement comprises a low-rate service requirement, and the first transmission requirement comprises a high-latency transmission requirement and/or a low-reliability transmission requirement; and
   the second service requirement comprises a high-rate service requirement, and the second transmission requirement comprises a low-latency transmission requirement and/or a high-reliability transmission requirement.

4. The method according to claim 2, wherein before sending the configuration information, the method further comprises:

   receiving first information, wherein the first information is used to determine that the terminal device expects to work in the first state or the second state, the first information is used to determine a first service requirement and/or a first transmission requirement of the terminal device, or the first information is used to determine a second service requirement and/or a second transmission requirement of the terminal device;
   the first service requirement comprises a low-rate service requirement, and the first transmission requirement comprises a high-latency transmission requirement and/or a low-reliability transmission requirement; and
   the second service requirement comprises a high-rate service requirement, and the second transmission requirement comprises a low-latency transmission requirement and/or a high-reliability transmission requirement.

5. The method according to any one of claims 1 to 4, wherein

   the first state comprises at least one of the following: an initial access state, an energy-saving state, a low-rate service transmission state, a high-latency service transmission state, a low-reliability service transmission state, and a default state; and/or

the second state comprises at least one of the following: a data transmission state, a high-rate service transmission state, a low-latency service transmission state, and a high-reliability service transmission state.

6. The method according to any one of claims 1 to 4, wherein

the first state is a state in which the terminal device supports a first capability, and the first capability comprises at least one of the following: a basic capability, a mandatory capability, a default capability, and a low power consumption capability; and/or

the second state is a state in which the terminal device supports a second capability, and the second capability comprises at least one of the following: a non-basic capability, an optional capability, and a high power consumption capability.

7. The method according to any one of claims 1 to 6, wherein

N1 is a predefined value or a preconfigured value, or N1 is indicated by first signaling; and/or
N2 is a predefined value or a preconfigured value, or N2 is indicated by second signaling; and/or
N1 and N2 have a multiple relationship.

8. The method according to claim 7, wherein

N1 is determined based on N2 and a first value X, and N2 is a predefined or preconfigured value; or
N2 is determined based on N1 and X, and N1 is a predefined or preconfigured value; and
X is a predefined value or a preconfigured value, or X is indicated by third signaling.

9. The method according to any one of claims 1 to 6, wherein the resource of the control channel comprises a frequency domain resource of the control channel; the terminal device is in the first state, and a size of the frequency domain resource of the control channel is less than or equal to N1; and the terminal device is in the second state, and the size of the frequency domain resource of the control channel is less than or equal to N2;

N1 and N2 are different predefined values in a same frequency band; or
N1 is determined based on a maximum bandwidth supported by the terminal device and a second value Y1, N2 is determined based on the maximum bandwidth supported by the terminal device and a third value Y2, and Y1 and Y2 are different predefined or preconfigured values, or Y1 and Y2 are different values in a first set; and
the first set is a predefined or preconfigured set, or the first set is indicated by fourth signaling.

10. The method according to any one of claims 1 to 6, wherein N1 is determined based on a first parameter set, and the first parameter set comprises at least one of the following parameters: a bandwidth part of the control channel and a subcarrier spacing of a carrier of the control channel.

11. The method according to claim 10, wherein the resource of the control channel comprises a frequency domain resource of the control channel, the terminal device is in the first state, and a size of the frequency domain resource of the control channel is less than or equal to N1; and

N1 is a smaller one of the bandwidth part of the control channel and a fourth value A, and A is a predefined or preconfigured value, or A is indicated by fifth signaling;
a size of the bandwidth part of the control channel belongs to a first bandwidth set, N1 is less than or equal to A, and the first bandwidth set is a predefined or preconfigured set, or the first bandwidth set is indicated by sixth signaling;

$$N1 = floor(\text{the size of the bandwidth part of the control channel}/n),$$

wherein floor indicates rounding down, and n is a predefined or preconfigured value, or n is indicated by seventh signaling;

$$N1 = floor(floor(\text{the size of the bandwidth part of the control channel}/6)*6/n);$$

or

the subcarrier spacing of the carrier of the control channel belongs to a first subcarrier spacing set, N1 is less than or equal to A, and the first subcarrier spacing set is a predefined or preconfigured set, or the first subcarrier spacing set is indicated by eighth signaling.

12. The method according to any one of claims 1 to 6, wherein the resource of the control channel comprises a time domain resource of the control channel, the terminal device is in the first state, a size of the time domain resource of the control channel is less than or equal to N1, N1 is determined based on a second parameter set, and the second parameter set comprises at least one of the following: a quantity of time units in the time domain resource of the control channel and a subcarrier spacing of a carrier of the control channel.

13. The method according to claim 12, wherein

the subcarrier spacing of the carrier of the control channel belongs to a second subcarrier spacing set, N1 is less than or equal to a fifth value B, B is a predefined or preconfigured value, or B is indicated by ninth signaling, and the second subcarrier spacing set is a predefined or preconfigured set, or the second subcarrier spacing set is indicated by tenth signaling; or
the quantity of time units in the time domain resource of the control channel belongs to a second set, N1 is less than or equal to B, and the second set is a predefined or preconfigured set, or the second set is indicated by eleventh signaling.

14. A communication method, comprising:

determining an $N^{th}$ resource in M resources in a first frequency domain range, wherein each of the M resources is used to transmit a control channel, M is an integer greater than 1, and N is an integer greater than or equal to 1 and less than or equal to M; and
detecting the control channel on the $N^{th}$ resource.

15. A communication method, comprising:

determining an $N^{th}$ resource in M resources in a first frequency domain range, wherein each of the M resources is used to transmit a control channel, M is an integer greater than 1, and N is an integer greater than or equal to 1 and less than or equal to M; and
sending the control channel on the $N^{th}$ resource.

16. The method according to claim 14 or 15, wherein

M is related to a size of the first frequency domain range; or
M is indicated by first signaling.

17. The method according to claim 14 or 15, wherein M is a smallest quantity K of resources in the first frequency domain range; and
K is in direct proportion to a size of the first frequency domain range.

18. The method according to claim 14 or 15, wherein

M is in direct proportion to a size of the first frequency domain range; or
M=floor(the size of the first frequency domain range/L), wherein floor indicates rounding down, and L is a predefined value or a preconfigured value, or L is indicated by second signaling.

19. The method according to any one of claims 14 to 18, wherein

N is determined based on identification information of the terminal device and M;
N is indicated by third signaling; or
a start position of the $N^{th}$ resource is determined based on the size of the first frequency domain range and M.

20. The method according to claim 19, wherein N=mod(the identification information of the terminal device, M), wherein mod indicates a modulo operation.

21. The method according to claim 19, wherein the start position of the $N^{th}$ resource = floor(the size of the first frequency domain range/M) * (N-1);

    or the start position of the $N^{th}$ resource = floor(floor(the size of the first frequency domain range/6) * 6/M) * (N-1), wherein
    floor indicates rounding down.

22. A communication apparatus, comprising a unit or a module configured to implement the method according to any one of claims 1 to 21.

23. A communication apparatus, wherein the communication apparatus comprises at least one processor, and the at least one processor is configured to perform the method according to any one of claims 1 to 21.

24. A communication system, wherein the communication system comprises a terminal device and a network device, wherein

    the terminal device is configured to perform the method according to any one of claims 1, 3, or 5 to 13; and
    the network device is configured to perform the method according to any one of claims 2, 4, or 5 to 13.

25. A communication system, wherein the communication system comprises a terminal device and a network device, wherein

    the terminal device is configured to perform the method according to any one of claims 14 or 16 to 21; and
    the network device is configured to perform the method according to any one of claims 15 or 16 to 21.

26. A computer-readable storage medium, wherein the computer-readable storage medium stores computer instructions, and when the computer instructions are executed, the computer is enabled to perform the method according to any one of claims 1 to 21.

27. A computer program product, wherein the computer program product comprises computer program code, and when the computer program code is run on a computer, the computer is enabled to perform the method according to any one of claims 1 to 21.

FIG. 1

| Terminal device | | Network device |
| --- | --- | --- |

201: Send configuration information, where the configuration information is used to configure a resource of a control channel; the terminal device is in a first state, and a size of the resource of the control channel is less than or equal to a first threshold N1; the terminal device is in a second state, and the size of the resource of the control channel is less than or equal to a second threshold N2; and N1 is less than N2

202: Detect the control channel on the resource of the control channel

FIG. 2

Terminal device | Network device

301: Determine an $N^{th}$ resource in M resources in a first frequency domain range, where each of the M resources is used to transmit a control channel, M is an integer greater than 1, and N is an integer greater than or equal to 1 and less than or equal to M

302: Determine the $N^{th}$ resource in the M resources in the first frequency domain range

303: Send the control channel on the $N^{th}$ resource

FIG. 3

Frequency

$2^{nd}$ resource

Four resources in a first frequency domain range

Time

FIG. 4

Communication apparatus 500

FIG. 5

FIG. 6

## INTERNATIONAL SEARCH REPORT

| International application No. |
| --- |
| **PCT/CN2024/108308** |

| A. | CLASSIFICATION OF SUBJECT MATTER |
| --- | --- |

H04W 52/02(2009.01)i

According to International Patent Classification (IPC) or to both national classification and IPC

| B. | FIELDS SEARCHED |
| --- | --- |

Minimum documentation searched (classification system followed by classification symbols)

IPC: H04W, H04L, H04B

Documentation searched other than minimum documentation to the extent that such documents are included in the fields searched

Electronic data base consulted during the international search (name of data base and, where practicable, search terms used)

CNTXT, WPABS, ENTXT, 3GPP: 终端, 用户设备, 状态, 模式, 节能, 省电, 能耗, 低速率, 低可靠, 空闲, 非连接, 非激活, 控制信道, 阈值, 资源, 频域, 第 2w 个, 发送, 接收, 传输, UE, state, energy, power, save, IDLE, inactive, PDCCH, threshold, resource, frequency, send, transmit, receive

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 113973360 A (HUAWEI TECHNOLOGIES CO., LTD.) 25 January 2022 (2022-01-25) description, paragraphs [0068]-[0179] | 1-13, 22-24, 26-27 |
| X | CN 111182627 A (HUAWEI TECHNOLOGIES CO., LTD.) 19 May 2020 (2020-05-19) description, paragraphs [0087]-[0172], and figures 1-10 | 14-23, 25-27 |
| A | CN 116458229 A (HUAWEI TECHNOLOGIES CO., LTD.) 18 July 2023 (2023-07-18) entire document | 1-27 |
| A | US 2023052430 A1 (LG ELECTRONICS INC.) 16 February 2023 (2023-02-16) entire document | 1-27 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **27 October 2024** | **01 November 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/108308**

| Patent document cited in search report | | | Publication date (day/month/year) | Patent family member(s) | | | Publication date (day/month/year) |
|---|---|---|---|---|---|---|---|
| CN | 113973360 | A | 25 January 2022 | WO | 2020029855 | A1 | 13 February 2020 |
| | | | | CN | 110831127 | A | 21 February 2020 |
| | | | | US | 2021168809 | A1 | 03 June 2021 |
| | | | | EP | 3836638 | A1 | 16 June 2021 |
| CN | 111182627 | A | 19 May 2020 | WO | 2020094110 | A1 | 14 May 2020 |
| | | | | US | 2021266837 | A1 | 26 August 2021 |
| | | | | EP | 3866539 | A1 | 18 August 2021 |
| CN | 116458229 | A | 18 July 2023 | WO | 2022110245 | A1 | 02 June 2022 |
| US | 2023052430 | A1 | 16 February 2023 | KR | 20220150279 | A | 10 November 2022 |
| | | | | US | 2023198601 | A1 | 22 June 2023 |
| | | | | EP | 4117205 | A1 | 11 January 2023 |
| | | | | JP | 2023512311 | A | 24 March 2023 |
| | | | | WO | 2021177782 | A1 | 10 September 2021 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310958212X